# FASCICULE DE BREVET EUROPEEN

(11) **EP 1 805 763 B1**
(45) Date de publication et mention de la délivrance du brevet: **13.08.2008**
(21) Numéro de dépôt: 05797278.8
(22) Date de dépôt: 21.10.2005
(51) Int. Cl.: G11B 23/03, G11B 23/04, G11B 33/04

(54) **PLATEAU ET BOÎTIER DE RANGEMENT POUR AU MOINS UNE PAIRE DE DISQUES COMPACTS**
PLATTE UND BOX FÜR MINDESTENS EIN PAAR COMPACT DISKS
PLATE AND BOX FOR AT LEAST ONE PAIR OF COMPACT DISKS

(30) Priorité: 26.10.2004 FR 0411411
(43) Date de publication de la demande: 11.07.2007
(73) Titulaire: La Francaise des Plastiques, 35680 Louvigne de Bais (FR)
(72) Inventeur: CHA, Philippe, F-35750 IFFENDIC (FR)
(74) Mandataire: Le Faou, Daniel
(86) Numéro de dépôt international: PCT/EP2005/055447
(87) Numéro de publication internationale: WO 2006/045757

(56) Documents cités:
- EP-A- 0 676 763
- US-A1- 2003 034 257
- US-A1- 2003 178 330
- US-A1- 2003 205 491

## Description

La présente invention concerne un plateau de rangement pour au moins une paire de disques compacts, en particulier de disques CD ou DVD.

Elle concerne également un boîtier (ou un coffret) de rangement de disques compacts, destiné à recevoir un ou plusieurs plateau(x) de rangement d'une paire de disques compacts.

L'invention a été conçue, plus précisément, dans le cadre d'un perfectionnement à un boîtier du type comprenant une feuille de base en carton ou en matériau similaire, sur laquelle est fixé un plateau en matière plastique de forme sensiblement carrée ou rectangulaire, ce plateau étant composé d'une partie centrale, munie d'une rosace (ou tulipe) apte à retenir un disque sur l'une de ses faces, dite externe, et d'une partie extérieure - qu'on appellera ci-après "encadrement" - collée sur la feuille de base par sa face opposée, dite interne.

Elle peut cependant trouver application pour d'autres types de conditionnement (boîtier, coffret, etc.) pour lesquels un ou plusieurs plateau(x) de rangement d'une paire de disques compacts est (sont) collé(s) sur un support, ce dernier n'étant pas nécessairement une feuille en carton ou en matériau similaire.

Dans un mode de réalisation largement commercialisé, la feuille de base consiste en un livret, le plateau étant fixé sur la face intérieure de sa couverture inférieure, tandis que sa couverture supérieure peut se rabattre sur le plateau afin de protéger le disque.

Selon une variante, le livret est en trois volets; le plateau est dans ce cas fixé sur la face intérieure de la partie médiane, et ses deux couvertures peuvent se rabattre (en se superposant) sur le plateau.

La partie centrale du plateau consiste en un renfoncement à contour circulaire, recevant le disque. Ce renfoncement communique avec quatre petites empreintes, également sous forme de renfoncements, répartis en carrés à la périphérie du renfoncement circulaire, selon un positionnement standardisé.

Ce sont ces empreintes qui sont collées à la feuille de base par leur face inférieure (ou face interne).

Cette standardisation est utile pour que les différents imprimeurs qui doivent assurer le collage des plateaux sur leur support, préalablement imprimé, en fonction du contenu du disque concerné, puissent utiliser des outils de manutention et de collage bien déterminés.

Les empreintes ont également pour fonction de faciliter la prise en mains du disque, pour le retirer de la rosace.

Un conditionnement de ce genre est représenté, par exemple, sur la figure 2 du document EP-A-1 239 484.

La rosace est généralement constituée d'une série de doigts élastiques pénétrant dans l'ouverture centrale du disque et la retenant par friction et/ou clipsage (voir par exemple les documents US 5 494 156 et US 6 364 108).

Un tel conditionnement présente l'avantage d'être pratique, léger et d'un prix de revient peu élevé.

Il a pour inconvénient de ne pouvoir recevoir qu'un seul disque.

L'objet de l'invention est de proposer un plateau destiné à ce même type de boîtier de telle façon qu'il puisse recevoir une paire de disques.

On connaît cependant, notamment par le EP-B-0 676 763 (voir le préamble de la revendication 1). un conditionnement pour disques compacts dont la configuration particulière permet de recevoir au moins deux disques, chacun des deux disques étant retenu par une rosace décalée par rapport à l'autre de telle sorte que les deux disques se chevauchent partiellement, en position superposée.

Un tel agencement affecte la compacité du boîtier et oblige à faire usage d'au moins deux rosaces distinctes, ce qui influe défavorablement sur le prix de revient et la facilité d'utilisation.

Il n'est pas compatible avec la mise en oeuvre d'empreintes de collage de configuration standard.

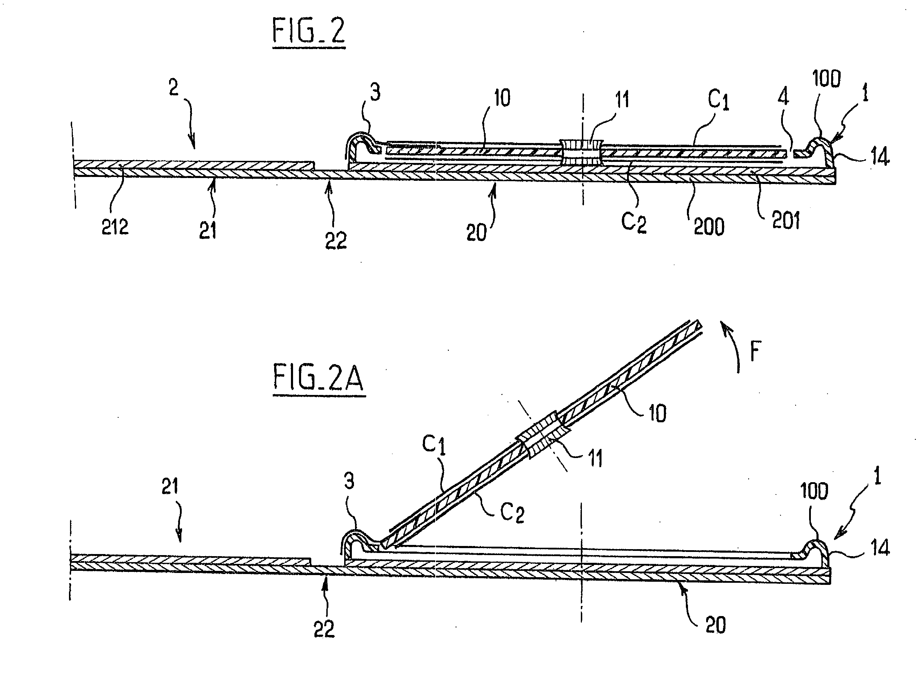

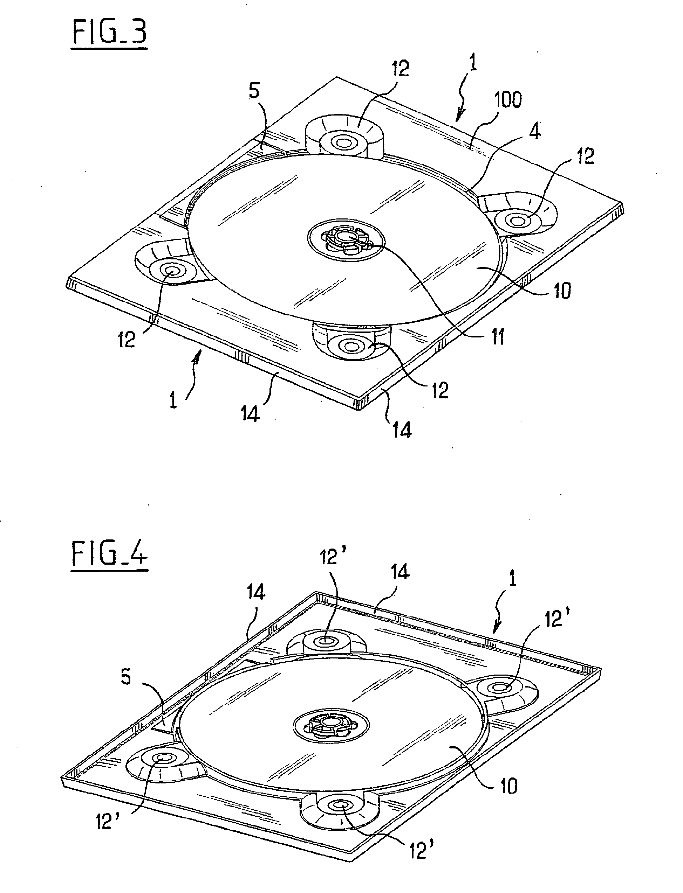

De plus, dans la variante destinée à recevoir deux disques uniquement, illustrée sur les figures 2 et 3, à laquelle s'adresse plus particulièrement la présente invention, il est très difficile en pratique d'enlever le disque inférieur et de le remettre en place sans avoir préalablement enlevé le disque supérieur, sauf à prévoir un écartement excessivement important de la valeur d'écartement de leurs plans respectifs et, corrélativement, un encombrement excessif de l'épaisseur du boîtier.

L'invention a pour objectif de résoudre ces problèmes, en proposant un plateau du genre traditionnel tel que décrit plus haut, à empreintes de collage standard, qui puisse contenir une paire de disques, sans que l'encombrement du boîtier en soit affecté.

Un autre objectif de l'invention est de proposer un plateau à double disque dans lequel il soit possible d'en prélever un, ou de le remettre en place, sans devoir enlever l'autre.

L'invention a pour objet un plateau de rangement en matière plastique pour au moins une paire de disques compacts, qui est destiné à être fixé par collage sur un support, par exemple sur une feuille de base en carton ou en matériau similaire, ce plateau ayant une forme sensiblement carrée ou rectangulaire, et étant composé d'une partie centrale de contour généralement circulaire, dont le diamètre correspond sensiblement à celui des disques, munie en son centre d'une rosace double apte à retenir une paire de disques, chacun sur l'une de ses faces, et d'une partie extérieure - appelée "encadrement" - apte à être collée sur ledit support au moyen d'empreintes en forme de bossages disposées selon les quatre angles d'un carré (fictif) à l'intérieur duquel s'inscrit le contour circulaire de la partie centrale (10).

Les objectifs annoncés plus haut sont atteints, conformément à l'invention, par le fait que cette partie centrale est essentiellement détachée dudit encadrement, ne lui étant que partiellement solidaire, ceci par une liaison articulée, et qu'elle s'inscrit dans une ouverture (traversante) circulaire concentrique, et légèrement plus grande, ménagée dans ledit encadrement, tandis que la liaison articulée comprend une patte d'attache solidaire de ladite partie centrale, passant entre deux empreintes voisines, et articulée à l'encadrement dans la région centrale de l'un des côtés du plateau.

En position de rangement, la partie centrale (avec les disques qu'elle porte) vient ainsi se positionner à l'intérieur de l'ouverture débouchante, légèrement plus grande, ménagée dans l'encadrement.

Elle ne se superpose pas à la paroi de fond du plateau, contrairement à ce qui se passe avec les dispositifs connus.

Il convient de noter qu'il a déjà été proposé des boîtiers de rangement en matière plastique composés de deux parties en forme de plaques externes carrées ou rectangulaires, articulées l'une à l'autre à la manière des deux couvertures d'un livre, et pourvues d'une troisième plaque interne, également articulée, munie d'une rosace double permettant de retenir deux disques (un sur chaque face).

Ce sont des produits différents des plateaux de rangement en matière plastique destinés à être fixé par collage sur un support tel qu'une feuille de base en carton.

Ce genre de boîtier, décrit par exemple dans les documents US 2003/0178330 A1 (voir figure 2) et US 2003/0034257 A1 requiert une quantité de plastique importante.

Il est donc lourd et relativement encombrant, car les épaisseurs des trois plaques et des disques se superposent.

Par ailleurs, selon un certain nombre de caractéristiques avantageuses, mais non limitatives, de la présente invention :
- ladite partie centrale est initialement reliée rigidement à l'encadrement au moyen de pontets frangibles, aptes à être facilement rompus à la première utilisation ;
- la partie centrale et l'encadrement forment deux pièces distinctes et ladite liaison articulée de la partie centrale à l'encadrement est réalisée au moyen d'une étiquette en film souple adhérant à ces deux parties, par exemple par surmoulage ;
- la partie centrale et l'encadrement forment une seule et même pièce, et sont réalisées dans une matière plastique souple qui présente, dans leur zone de liaison, une ligne d'épaisseur réduite formant charnière ;
- la partie centrale et l'encadrement forment deux pièces distinctes et ladite liaison articulée de la partie centrale à l'encadrement est réalisée par des organes mécaniques tels que des tétons formant tourillons d'articulation ;
- le plateau de rangement est collé sur une feuille de base en carton ou en matière similaire ;
- la feuille de base sur laquelle est collé le plateau de rangement consiste en un livret, le plateau étant fixé sur la face interne de la couverture inférieure du livret, tandis que sa couverture supérieure peut se rabattre sur le plateau afin de protéger les disques ;
- la liaison articulée de la partie centrale avec l'encadrement est située au voisinage de la tranche de ce livret, reliant ses couvertures inférieure et supérieure ;
- le bord de l'ouverture ménagée dans la partie extérieure est pourvu à sa base de moyens de retenue et de support d'un troisième disque, de sorte que celui-ci se trouve intercalé entre le disque porté par la face interne de la partie centrale - lorsque celle-ci est positionnée dans le plan général contenant l'encadrement - et le support sur lequel est collé l'encadrement ;
- le plateau de rangement est fixé sur une feuille de base qui consiste en un livret, comprenant une couverture inférieure sur laquelle est collé ledit plateau et une couverture supérieure apte à se rabattre sur le plateau afin de protéger les disques, ces deux couvertures étant reliées l'une à l'autre par des lignes de pivotement à une partie intermédiaire, appelée tranche, dont la largeur correspond sensiblement à l'épaisseur dudit plateau, ladite liaison articulée de la partie centrale avec l'encadrement étant située au voisinage de cette tranche.

L'invention concerne également un boîtier de rangement pour au moins une paire de disques compacts, qui comprend un support sur lequel est fixé au moins un plateau ayant les caractéristiques mentionnées ci-dessus.

D'autres caractéristiques et avantages de l'invention apparaîtront de la description qui va maintenant en être faite, en référence aux dessins annexés, sur lesquels:
La figure 1 est une vue générale, en perspective, d'un boîtier traditionnel (ouvert) conforme à l'état de la technique, et dont l'objet de l'invention est un perfectionnement ;
La figure 2 est une vue schématique et partielle d'un boîtier pourvu d'un plateau selon l'invention, coupé par un plan transversal, avec son plateau disposé à plat, en position de stockage des disques ;
La figure 2A est une vue similaire à celle de la figure 2, la partie centrale du plateau étant légèrement relevée ;
Les figures 3 et 4 sont des vues en perspective, respectivement de dessus et de dessous, d'un plateau conforme à l'invention ;
Les figures 5 à 7 sont des vues similaires à celle de la figure 3, représentant la partie centrale du plateau dans des positions relevées avec un angle de plus en plus ouvert ;
La figure 8 est une vue de dessus partielle d'un boîtier ;
Les figures 9 à 12 représentent une variante de boîtier, apte à stocker trois disques compacts ;

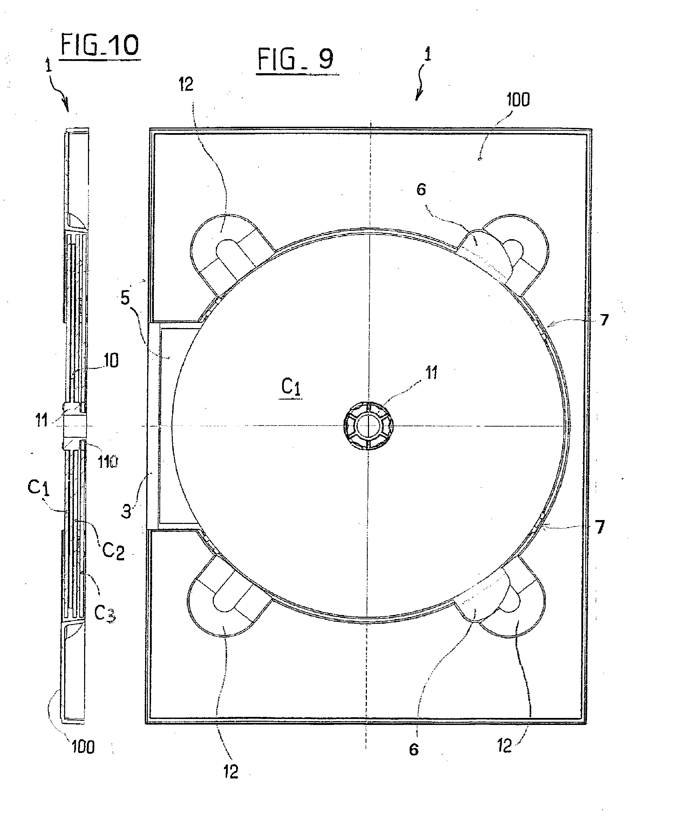

Les figures 9 et 10 représentent le plateau de rangement (sans son support), avec les disques, respectivement vu de dessus et en coupe axiale ;

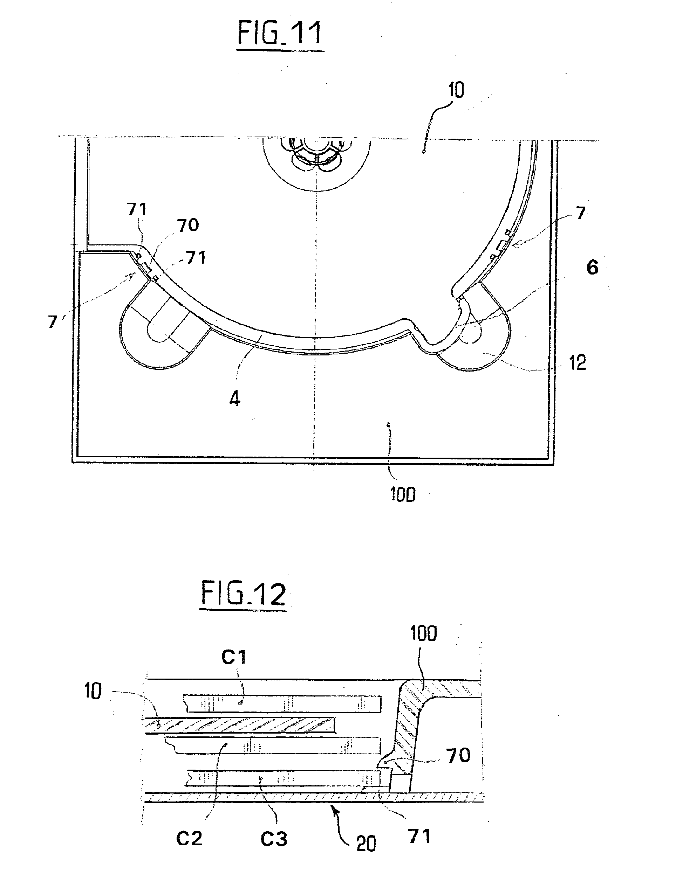

La figure 11 est une demi-vue similaire à celle de la figure 9, mais sans disque ;
La figure 12 est une vue de détail représentant les moyens de retenue et de support d'un troisième disque compact.

Le plateau est représenté sans ses disques, sauf sur les figures 2 et 2A, sur lesquelles les disques (CD ou DVD) sont désignés par les références **C1** et C2, ainsi que sur les figures 9, 10 et 12, sur lesquelles ils sont désignés **C1**, **C2** et C3.

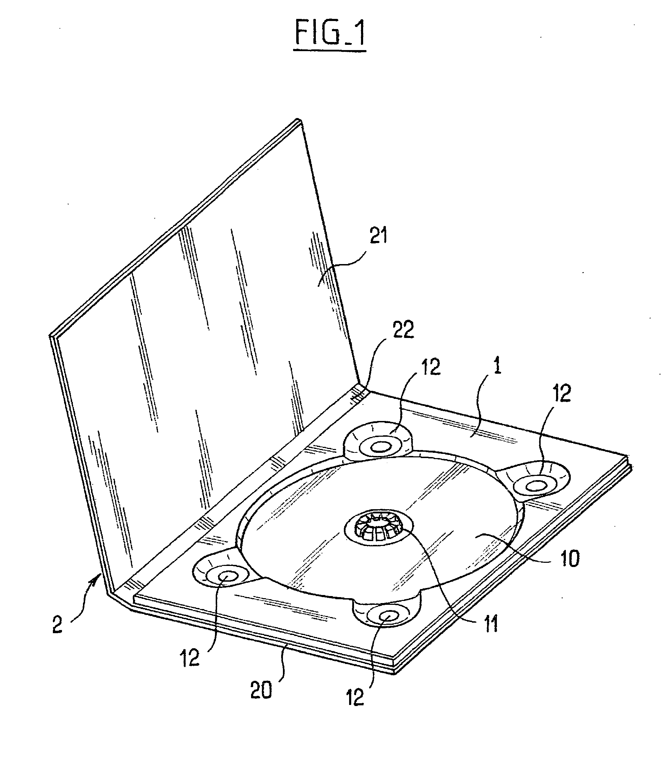

En référence à la figure 1, qui représente un boîtier classique destiné au stockage et à la protection d'un disque unique, on a désigné par la référence 1 un plateau en matière plastique porté par un support en carton 2 ayant la forme d'un livret.

Le livret 2 comprend une couverture inférieure 20, sur laquelle est fixé le plateau 1, et une couverture supérieure 21 apte à se rabattre sur le plateau 1, et le disque qui y est stocké (non représenté), pour le protéger.

Les couvertures 20 et 21 ont une forme carrée ou rectangulaire, dont le contour correspond à celui du plateau 1. Celui-ci est plat, et de faible épaisseur. Ces couvertures 20, 21 sont reliées par un chant, ou tranche, 22 dont la largeur correspond à l'épaisseur de ce plateau.

Comme le montre la figure 2, les couvertures 20 et 21 sont avantageusement formées de deux feuilles de carton superposées et collées 200-201 et, respectivement, 200-212, formant une double épaisseur, tandis que la tranche 22 possède une seule épaisseur, correspondant à l'une des feuilles (200).

Le plateau 1 est évidé de manière à présenter un renfoncement central circulaire 10, de faible profondeur (et non pas une ouverture traversante) ; il est muni en son centre d'une rosace 11 de type connu, apte à s'engager dans le trou central d'un disque compact (non représenté) afin de le retenir fermement dans cet évidement.

A la périphérie de ce dernier sont disposées quatre empreintes 12, réparties à 90° en vis-à-vis des diagonales du plateau. Elles forment des bossages dont la convexité est tournée vers le bas, destinés à être fixés par leur face inférieure (ou interne), référencée 12' sur la figure 4, par collage contre la face supérieure (ou interne) de la couverture 20.

Ces empreintes 12 ont une forme et une disposition standardisée, comme expliqué plus haut. Elles ont un contour en forme de « U », et débouchent dans l'évidement central 10 de manière à faciliter la prise en main du disque qui y est logé.

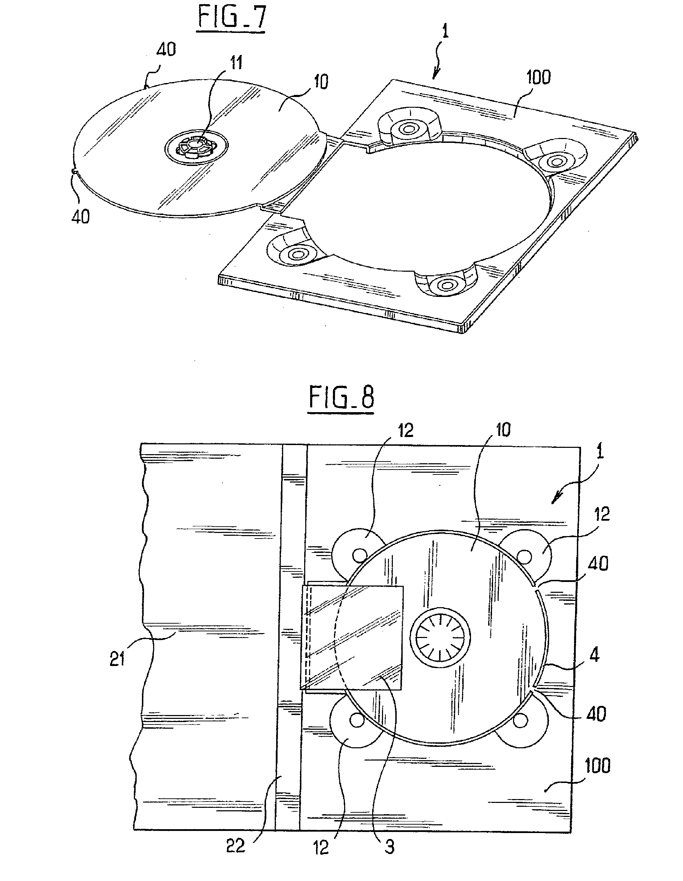

Conformément à l'invention, comme on peut le voir notamment sur les figures 3 et 8, la partie centrale 10 est essentiellement détachée du reste 100 du plateau, qui entoure cette partie centrale 10, et qu'on appellera ci-après «encadrement» ; elle n'en est que partiellement solidaire, par une liaison articulée.

La partie centrale 10 a une forme discoïde, dont le diamètre correspond sensiblement à celui des disques, et elle s'inscrit dans une ouverture circulaire concentrique, et légèrement plus grande, ménagée dans l'encadrement 100.

Entre le bord de cette ouverture et le pourtour de la partie 10, il y a donc un léger interstice quasi annulaire 4 interrompu uniquement au niveau d'une patte d'attache 5. Celle-ci forme partie intégrante de ladite partie centrale 10, et sert à la liaison articulée de cette dernière avec l'encadrement. Cette patte 5, de largeur relativement faible, passe entre les deux empreintes voisines 12 situées du côté de la tranche 22 (voir figure 8).

Elle est reliée au bord de l'encadrement 100 situé de ce côté, dans la région centrale de ce bord, et y est articulée.

Dans le mode de réalisation illustré, la liaison articulée est obtenue par l'intermédiaire d'un film souple 3 adhérant, par exemple par surmoulage, aux deux parties 10 et 100.

Un système d'articulation de ce genre est connu en soi, par exemple par le brevet FR 2 783 080 pour la liaison d'un plateau porte disques avec une barrette-support destinée à être insérée dans un boîtier standard (voir notamment page 5, lignes 9-31 et figure 2 de ce brevet).

On ne sortirait cependant pas du champ de l'invention en mettant en oeuvre un système d'articulation différent, connu en soi, notamment un affaiblissement de matière (rainurage) formant charnière ou des tourillons de pivotement mécaniques classiques.

La partie 10 est munie d'une rosace double 11 permettant la retenue d'une paire de disques **C1**, **C2**, chacun sur l'une de ses faces, comme on le voit sur les figures 2 et 2A. La rosace double 11 est de type connu, par exemple telle que celle décrite dans le FR-B- 2 783 080 déjà cité, auquel on pourra se référer au besoin.

La partie fixe du plateau 1, qui correspond à l'encadrement, est en appui sur la couverture 20 à la fois par ses zones de collage, qui correspondent aux empreintes 12, mais également par son rebord périphérique 14, recourbé vers le bas.

Comme on le voit sur la figure 2, lorsque le dispositif se trouve dans la position de stockage des deux disques **C1** et **C2**, la rosace double vient également en appui (par sa face inférieure) contre cette couverture. Elle constitue une butée qui maintient la partie centrale mobile 10 correctement positionnée dans l'ouverture de l'encadrement 100, dans l'épaisseur de celui-ci, parallèlement à la couverture 20.

Ainsi, on est assuré que le disque **C2** ne vient pas en contact contre la face supérieure -ou interne- de la couverture 20 et que le disque **C1** ne vient pas non plus en contact contre la face interne de la couverture 21 lorsque celle-ci est rabattue sur le plateau 1 pour le protéger (livret fermé).

Lorsqu'on souhaite prélever un disque, on ouvre le livret et on fait pivoter la partie de plateau 10, avec ses disques, vers le haut, comme symbolisé par la flèche **F** sur la figure 2A. La présence des empreintes 12 facilite cette prise en mains.

Ces empreintes 12 ont donc une double fonction :
- leur face supérieure (concave), qui constitue une petite cuvette, permet l'introduction d'un doigt pour faciliter le rabattement vers le haut de la partie centrale 10 ;
- leur face inférieure (concave) sert au collage de l'encadrement 100 sur la couverture 20 du support.

On peut retirer aisément le disque **C1**, ceci même sans faire pivoter la partie centrale mobile 10.

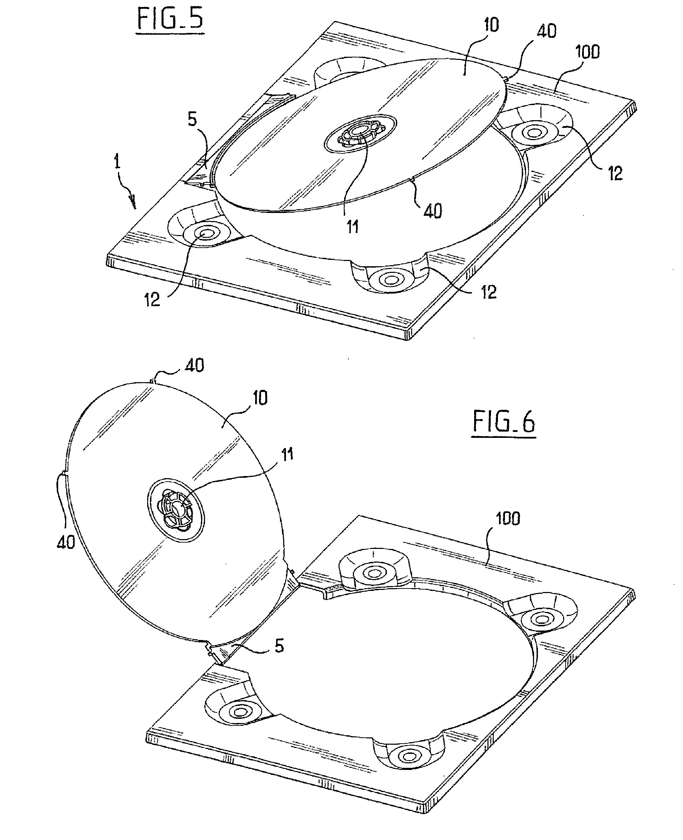

Pour saisir le disque inférieur **C2**, ont procède à un pivotement de cette partie (figures 5 à 7).

Chacun des disques est accessible indépendamment de l'autre.

De préférence les deux éléments 10 et 100 du plateau sont moulés en même temps par injection dans un moule dont l'empreinte possède une nervure conformée pour constituer l'interstice 4 séparant ces deux éléments. Cependant, cette nervure est interrompue pour laisser subsister quelques points de liaison -ou pontets-, par exemple deux pontets désignés 40 sur les figures 5 à 8.

Ces pontets, de faible résistance mécanique, sont facilement sécables par cisaillement.

Ainsi, en sortie de moule, le plateau 1 forme un ensemble rigide,avec la partie 10 dans le même plan général de l'encadrement 100, facilitant sa manipulation, notamment son empilage et son transport, ainsi qu'éventuellement son collage (par l'imprimeur) sur la feuille support 2.

En vue de son utilisation on force sur la partie 10 pour sectionner les pontets 40, ce qui permet de la faire pivoter librement.

La variante de plateau illustrée aux figures 9 à 12 est adaptée pour recevoir trois disques, deux d'entre eux -**C1** et **C2**- étant portés par la partie centrale pivotante 10, comme dans le mode de réalisation précédent, tandis que le troisième -**C3**- est inséré et retenu dans l'ouverture centrale.

De plus, la partie 10 est pourvue d'une paire d'oreilles de préhension 6 venant en regard de deux renfoncements 12 (du côté opposé à l'articulation 3).

La rosace double 11 se prolonge vers le bas par une partie 110 de plus faible diamètre, apte à traverser l'ouverture centrale du disque **C3**.

Le bord de l'ouverture de l'encadrement 100 présente, à sa base, des moyens 7 de retenue et de support du disque inférieur **C3**.

Dans l'exemple illustré, il est prévu quatre moyens 7, régulièrement répartis, deux du côté de l'articulation 3, et deux autres du côté opposé.

Chacun d'eux comprend une paire de butées d'appui 71 qui entourent un becquet de retenue 70 élastiquement déformable. L'inverse serait naturellement possible, à savoir une butée d'appui centrale, disposée entre deux becquets de retenue.

Quand le disque **C3** est inséré "à fond" dans l'ouverture de l'encadrement 100, son bord franchit le becquet 70 (dont le dessus est chanfreiné), et se trouve emprisonné sous celui-ci.

Il repose par sa zone de bordure sur les butées 71, évitant que sa face intérieure ne vienne en contact direct avec la couverture inférieure 20 sur laquelle et collé le plateau (voir figure 12).

Pour enlever le disque **C3**, il faut tout d'abord faire pivoter la partie centrale 10 vers le haut, ce qui est facilité par la présence des oreilles 6 en regard des renfoncements correspondant aux bossages 12.

Le becquet 70 ne recouvre le bord du disque **C3** que très faiblement, de sorte qu'une légère flexion de celui-ci, et/ou la déformation élastique du becquet 70, lorsqu'on saisit le disque, suffisent à l'extraire du bas vers le haut.

Il va de soi qu'un plateau de rangement servant au stockage de seulement deux disques, tel que celui qui fait l'objet du premier mode de réalisation, pourrait être également doté d'une partie centrale pivotante munie d'oreilles facilitant la préhension.

Les pontets frangibles, qui relient initialement la partie centrale à l'encadrement, sont avantageusement réalisés au niveau de ces oreilles, ces dernières ayant une configuration adaptée à cet effet.

## Revendications

1. Plateau de rangement en matière plastique (1) pour au moins une paire de disques compacts, qui est destiné à être fixé par collage sur un support, par exemple sur une feuille de base en carton ou en matériau similaire (2), ce plateau (1) ayant une forme sensiblement carrée ou rectangulaire, et étant composé d'une partie centrale (10) de contour généralement circulaire, dont le diamètre correspond sensiblement à celui des disques, munie en son centre d'une rosace double (11) apte à retenir une paire de disques (C1, C2), chacun sur l'une de ses faces, et d'une partie extérieure (100) - appelée "encadrement" - apte à être collée sur ledit support au moyen d'empreintes en forme de bossages (12) disposées selon les quatre angles d'un carré (fictif) à l'intérieur duquel s'inscrit le contour circulaire de la partie centrale (10), cette partie centrale (10) est essentiellement détachée dudit encadrement (100), ne lui étant que partiellement solidaire, ceci par une liaison articulée (3-5), et qu'elle s'inscrit dans une ouverture circulaire concentrique, et légèrement plus grande, ménagée dans ledit encadrement (100), **caractérisé par le fait que** la liaison articulée comprend une patte d'attache (5) solidaire de ladite partie centrale, passant entre deux empreintes (12) voisines, et articulée à l'encadrement dans la région centrale de l'un des côtés du plateau (1).

2. Plateau de rangement selon la revendication 1, **caractérisé par le fait que** ladite partie centrale (10) est initialement reliée rigidement à l'encadrement (100) au moyen de pontets frangibles (40), aptes à être facilement rompus à la première utilisation.

3. Plateau de rangement selon la revendication 1 ou la revendication 2, **caractérisé par le fait que** la partie centrale (10) et l'encadrement (100) forment deux pièces distinctes et que ladite liaison articulée de la partie centrale à l'encadrement est réalisée au moyen d'une étiquette en film souple (3) adhérant à ces deux parties, par exemple par surmoulage.

4. Plateau de rangement selon la revendication 1 ou la revendication 2, **caractérisé par le fait que** la partie centrale (10) et l'encadrement (100) forment une seule et même pièce, et sont réalisées dans une matière plastique souple qui présente, dans leur zone de liaison, une ligne d'épaisseur réduite formant charnière.

5. Plateau de rangement selon l'une la revendication 1 ou la revendication 2, **caractérisé par le fait que** la partie centrale (10) et l'encadrement (100) forment deux pièces distinctes et que ladite liaison articulée de la partie centrale à l'encadrement est réalisée par des organes mécaniques tels que des tétons formant tourillons d'articulation.

6. Plateau de rangement selon l'une des revendications 1 à 5, collé sur une feuille de base (2) en carton ou en matière similaire.

7. Plateau de rangement selon la revendication 6, **caractérisé par le fait que** ladite feuille de base (2) sur laquelle il est collé consiste en un livret, le plateau (1) étant fixé sur la face interne de la couverture inférieure (20) du livret, tandis que sa couverture supérieure (21) peut se rabattre sur le plateau (1) afin de protéger les disques.

8. Plateau de rangement selon la revendication 7, **caractérisé par le fait que** ladite liaison articulée (3-5) de la partie centrale avec l'encadrement est située au voisinage de la tranche (22) du livret, reliant ses couvertures inférieure et supérieure.

9. Plateau de rangement selon l'une des revendications précédentes, **caractérisé par le fait que** le bord de l'ouverture ménagée dans la partie extérieure (100) est pourvu à sa base de moyens (7) de retenue et de support d'un troisième disque (C3), de sorte que celui-ci se trouve intercalé entre le disque (C2) porté par la face interne de la partie centrale (10) - lorsque celle-ci est positionnée dans le plan général contenant l'encadrement (100)- et le support (2) sur lequel est collé l'encadrement.

10. Plateau de rangement selon la revendication 1, **caractérisé en ce qu'**il est fixé sur une feuille de base (2) qui consiste en un livret, comprenant une couverture inférieure (20) sur laquelle est collé ledit plateau (1) et une couverture supérieure (21) apte à se rabattre sur le plateau (1) afin de protéger les disques, ces deux couvertures étant reliées l'une à l'autre par des lignes de pivotement à une partie intermédiaire (22), appelée tranche, dont la largeur correspond sensiblement à l'épaisseur dudit plateau (1), ladite liaison articulée de la partie centrale (10) avec l'encadrement (100) étant située au voisinage de cette tranche (22).

11. Boîtier de rangement pour au moins une paire de disques compacts, qui comprend un support sur lequel est fixé au moins un plateau conforme à l'une des revendications précédentes.

## Claims

1. A storage tray of plastics material (1) for at least one pair of compact disks, which tray is designed to be fastened to a support by adhesive bonding, e.g. onto a base sheet of card or similar material (2), the tray (1) being substantially square or rectangular in shape and being made up both of a central portion (10) having a generally circular outline, of diameter that corresponds substantially to the diameter of the disks, being provided in its center with a double hub (11) suitable for retaining a pair of disks (C1, C2), each on one of its faces, and of an outside portion (100) - referred to as a "frame" - suitable for being adhesively bonded onto the said support by means of indentation in the form of projections (12) located in the four corners of a notional square within which the circular outline of the central portion (10) is inscribed, the tray being **characterized by** the facts that said central portion (10) is essentially detached from said frame (100), being secured in part thereto via a hinged link (3-5), and that it is inscribed in a slightly larger concentric circular opening formed in said frame (100), while the hinged link comprises a fastener tab (5) secured to said central portion, passing between two adjacent indentations (12), and being hinged to the frame in the central region of one of the sides of the tray (1).

2. A storage tray according to claim 1, **characterized by** the fact that said central portion (10) is initially rigidly connected to the frame (100) by means of breakable bridges (40) that are suitable for being broken easily on first use.

3. A storage tray according to claim 1 or claim 2, **characterized by** the fact that the central portion (10) and the frame (100) form two distinct parts and that said hinged link between the central portion and the frame is made by means of a label of flexible film (3) adhering to said two parts, e.g. by overmolding.

4. A storage tray according to claim 1 or claim 2, **characterized by** the fact that the central portion (10) and the frame (100) form a single part, and are made of a flexible plastics material that, in their link zone, presents a line of reduced thickness forming a hinge.

5. A storage tray according to claim 1 or claim 2, **characterized by** the fact that the central portion (10) and the frame (100) form two distinct parts, and that said hinged link between the central portion and the frame is made by mechanical members such as studs forming stub hinge-pins.

6. A storage tray according to any one of claims 1 to 5, adhesively bonded on a base sheet (2) of card or similar material.

7. A storage tray according to claim 6, **characterized by** the fact that said base sheet (2) on which it is bonded consists of a booklet, the tray (1) being fastened on the inside face of the bottom cover (20) of the booklet, while its top cover (21) can be folded down onto the tray (1) in order to protect the disks.

8. A storage tray according to claim 7, **characterized by** the fact that said hinged link (3-5) between the central portion and the frame is situated in the vicinity of the edge face (22) of the booklet that interconnects its bottom and top covers.

9. A storage tray according to any preceding claim, **characterized by** the facts that the edge of the opening formed in the outside portion (100) is provided at its base with means (7) for retaining and supporting a third disk (C3), such that the third disk is interposed between the disk (C2) carried by the inside face of the central portion (10) - when positioned in the general plane containing the frame (100) - and the support (2) onto which the frame is bonded.

10. A storage tray according to claim 1, **characterized in that** it is fastened on a base sheet (2) constituted by a booklet, comprising a bottom cover (20) onto which said tray (1) is adhesively bonded, and a top cover (21) suitable for being a folded down onto the tray (1) in order to protect the disks, the two covers being connected to each other via pivot lines connecting to an intermediate portion (22) constituting an edge face, of width corresponding substantially to the thickness of said tray (1), said hinged link between the central portion (10) and the frame (100) being situated in the vicinity of said edge face (22).

11. A storage case for at least one pair of compact disks, the case including a support on which at least one tray according to any preceding claim is fastened.

## Patentansprüche

1. Aus Kunststoff hergestellte Platte (1) zur Aufbewahrung von mindestens einem Paar von Compact Disks, die dazu vorgesehen ist durch Kleben auf einem Träger, zum Beispiel auf einem flächigen Basiselement aus Karton oder aus einem ähnlichen Material (2) befestigt zu werden, wobei die Platte (1) eine im Wesentlichen quadratische oder rechteckige Form hat und gebildet ist durch einen zentralen Teil (10) mit einer allgemein kreisförmigen Kontur, dessen Durchmesser im Wesentlichen dem der Disks entspricht, der in seinem Zentrum mit einer zum Halten eines Paars von Disks (C1, C2), jeweils eine auf einer seiner Seiten, geeigneten doppelten Rosette (11) versehen ist, und durch einen äußeren Teil (100) - "Rahmen" genannt - der dazu geeignet ist, auf den Träger mittels Vertiefungen in Form von Bossen (12), die entsprechend den vier Ecken eines (fiktiven) Quadrats, in dessen Innerem die kreisförmige Kontur des zentralen Teils (10) einbeschrieben ist, angeordnet sind, aufgeklebt zu werden, wobei der zentrale Teil (10) im Wesentlichen losgelöst ist von dem besagten Rahmen (100), mit dem er nur teilweise zusammengehalten ist, nämlich durch eine gelenkige Verbindung (3-5), und in einer konzentrischen kreisförmigen und geringfügig größeren Öffnung, die in dem Rahmen (100) vorgesehen ist, einbeschrieben ist, **dadurch gekennzeichnet, dass** die gelenkige Verbindung eine mit dem besagten zentralen Teil verbundene Befestigungslasche (5) umfasst, die zwischen zwei benachbarten Vertiefungen (12) verläuft und im zentralen Bereich einer der Seiten der Platte (1) mit dem Rahmen gelenkig verbunden ist.

2. Aufbewahrungsplatte nach Anspruch 1, **dadurch gekennzeichnet, dass** der zentrale Teil (10) anfänglich starr mit dem Rahmen (100) verbunden ist mittels zerbrechbarer Brückenelemente (40), die dazu geeignet sind, dass sie bei der ersten Benutzung leicht zerstört werden.

3. Aufbewahrungsplatte nach Anspruch 1 oder Anspruch 2, **dadurch gekennzeichnet, dass** der zentrale Teil (10) und der Rahmen (100) zwei getrennte Stücke bilden und dass die besagte gelenkige Verbindung des zentralen Teils mit dem Rahmen mittels eines Aufklebers aus geschmeidigem Film (3) hergestellt ist, der an den zwei Teilen haftet, zum Beispiel durch Abformung.

4. Aufbewahrungsplatte nach Anspruch 1 oder Anspruch 2, **dadurch gekennzeichnet, dass** der zentrale Teil (10) und der Rahmen (100) ein und dasselbe Stück bilden und aus einem geschmeidigen Kunststoffmaterial hergestellt sind, das in deren Verbindungszone eine ein Scharnier bildende Linie verringerter Dicke aufweist.

5. Aufbewahrungsplatte nach Anspruch 1 oder Anspruch 2, **dadurch gekennzeichnet, dass** der zentrale Teil (10) und der Rahmen (100) zwei getrennte Stücke bilden, und dass die besagte gelenkige Verbindung des zentralen Teils mit dem Rahmen durch mechanische Elemente hergestellt ist, so wie Gelenkzapfen bildende Ansätze.

6. Aufbewahrungsplatte nach einem der Ansprüche 1 bis 5, die auf ein flächiges Basiselement (2) aus Karton oder aus einem ähnlichen Material aufgeklebt ist.

7. Aufbewahrungsplatte nach Anspruch 6, **dadurch gekennzeichnet, dass** das flächige Basiselement (2), auf welchem sie aufgeklebt ist, in einem Büchlein besteht, wobei die Platte (1) auf der Innenseite des unteren Deckels (20) des Büchleins befestigt ist, während dessen oberer Deckel (21) auf die Platte (1) herunterklappen kann, um die Disks zu schützen.

8. Aufbewahrungsplatte nach Anspruch 7, **dadurch gekennzeichnet, dass** die gelenkige Verbindung (3-5) des zentralen Teils mit dem Rahmen nahe dem Rücken (22) des Büchleins, der dessen untere und obere Deckel verbindet, befindlich ist.

9. Aufbewahrungsplatte nach einem der vorhergehenden Ansprüche, **dadurch gekennzeichnet, dass** der Rand der im äußeren Teil (100) ausgebildeten Öffnung an seiner Basis mit Mitteln (7) zum Halten und Tragen einer dritten Disk (C3) versehen ist, derart, dass diese sich zwischen der auf der inneren Seite des zentralen Teils (10) - wenn dieser in der den Rahmen (100) enthaltenden Hauptebene positioniert ist - getragenen Disk (C2) und dem Träger (2), auf welchen der Rahmen aufgeklebt ist, eingeschoben befindet.

10. Aufbewahrungsplatte nach Anspruch 1, **dadurch gekennzeichnet, dass** sie auf einem flächigen Basiselement (2) fixiert ist, welches in einem Büchlein besteht, das einen unteren Deckel (20) umfasst, auf welchen die Platte (1) aufgeklebt ist, sowie einen oberen Deckel (21), der dazu geeignet ist, auf die Platte (1) herunterzuklappen, um die Disks zu schützen, wobei die zwei Deckel über Gelenklinien an einem dazwischenliegenden Teil (22), Rücken genannt, dessen Breite im Wesentlichen der Dicke der Platte (1) entspricht, miteinander verbunden sind, wobei die besagte gelenkige Verbindung des zentralen Teils (10) mit dem Rahmen (100) in der Nähe dieses Rückens (22) befindlich ist.

11. Aufbewahrungsbox für mindestens ein Paar von Compact Disks, die einen Träger umfasst, auf welchem mindestens eine Platte gemäß einem der vorhergehenden Ansprüche befestigt ist.
